# EUROPEAN PATENT SPECIFICATION

(11) **EP 0 583 289 B1**
(45) Date of publication and mention of the grant of the patent: **27.12.1996**
(21) Application number: 92909225.2
(22) Date of filing: 29.04.1992
(51) Int. Cl.: B29C 53/62

(54) **A METHOD FOR MANUFACTURING A JOINT PIPE**
VERFAHREN ZUR HERSTELLUNG EINER ROHRVERBINDUNG
PROCEDE DE FABRICATION D'UN TUYAU DE LIAISON

(30) Priority: 30.04.1991 FI 912101
(43) Date of publication of application: 23.02.1994
(73) Proprietor: OY KWH PIPE AB, 65101 Vasa (FI)
(72) Inventor: SUNDQVIST, Kristian, SF-65520 Nykarleby (FI); BLOMQVIST, Gunnar, 00000000000 (FI)
(74) Representative: Eriksson, Svante Johan Christer
(86) International application number: PCT/FI92/00130
(87) International publication number: WO 92/19438

(56) References cited:
- GB-A- 2 232 920
- SE-B- 365 747
- US-A- 3 243 328

## Description

The present invention relates to a method for manufacturing a joint pipe at an end of a thermoplastic pipe comprising the steps of spirally winding an extruded melt thermoplastic profile with an overlapping around a rotatably driven mandrel, cooling the extruded joint pipe, cutting the free end of the joint pipe by means of a rotating knife and removing the completed joint pipe from the mandrel.

In SE-B-365 747 (Dynamit Nobel) or the corresponding DE-A-1 944 594 such a method for manufacturing a sleeve and a pipe in one piece with a pipe is disclosed. Both the pipe and the sleeve are manufactured continually in one and the same operation by spirally winding a thermoplastic profile around a rotating mandrel. In order to receive a sleeve or joint pipe an axially movable cylindrical ring portion is applied around the mandrel. This ring portion is moved away from the mandrel together with the spirally wound pipe produced. The produced pipe is then cut off at the middle portion of the ring portion by means of a rotating knife, thus resulting in two joint pipes. When the two joint pipes have been separated from each other the ring portion can be removed. When such a length of pipe has been manufactured that a new pair of joint pipes is to be produced the ring portion will then again be applied around the mandrel. If the joint pipes are produced in this way the manufacturer has to keep both pipes with and without a sleeve stored. Further any disturbance during the extruding and winding process will result in considerable material losses.

In US-A-3 243 328 (Britton et al) a method of making spirally wound flexible, plastic tubing is disclosed but there is no teaching of manufacturing a joint pipe.

The object of the present invention is to manufacture joint pipes on prefabricated thermoplastic pipes avoiding the problems arising when the method according to SE-A-365 747 is used.

The method according to the present invention is characterized by the steps stated in the characterizing part of Claim 1.

Further characteristic steps of the invention are presented in the accompanying Claims 2-7.

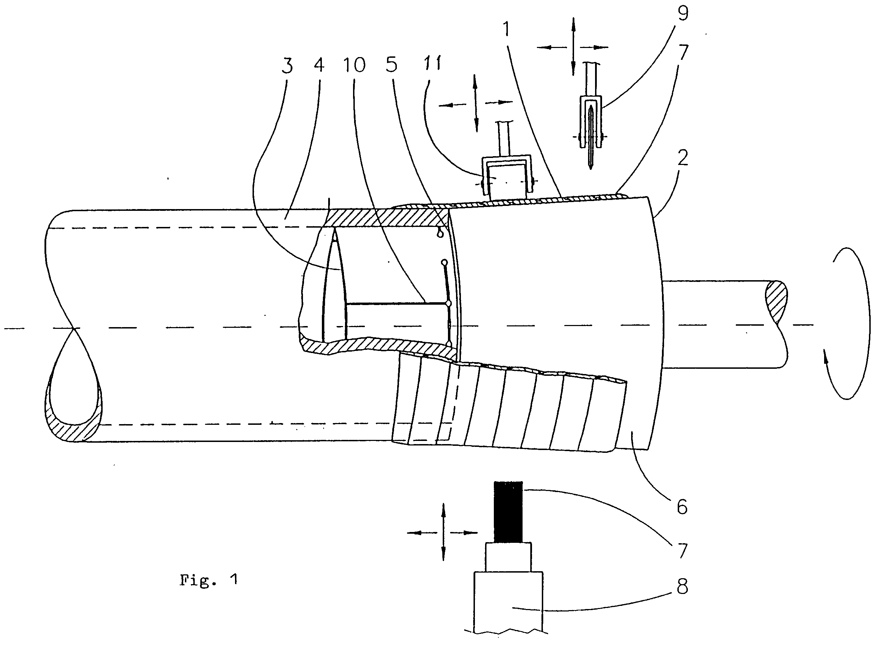

The invention is next described in more detail with reference to the accompanying drawings, in which
- Fig. 1: shows a scheme of principle of a joint pipe manufactured according to the present invention,
- Fig. 2: shows another example of a joint pipe manufactured according to the invention, and
- Fig. 3 and 4: show alternative applications of the joint pipe of Fig. 2.

When manufacturing a joint pipe 1, a rotatably driven, heated mandrel 2 with a mainly cylindrical end section 3 is used, through which a pipe end 4, which is to be provided with the joint pipe 1, is applicable. The cylindrical end section 3 has an outer diameter, which mainly corresponds to the inner diameter of the pipe end 4. The cylindrical end section 3 transfers via a radially directed stop surface 5 into a weakly conical main section 6. The end surface of the pipe end 4 is intended to be located against this stop surface 5 during the entire manufacturing process, because of which the width of the stop surface 5 preferably corresponds to the wall thickness of the pipe end 4 so that a transition as uniform as possible is obtained between the outer surface of the pipe end 4 and the conical main section 6 of the mandrel 2.

After the pipe end 4 is applied onto the cylindrical section of the mandrel 2, the mandrel 2 is continuously maintained in rotation and heated up to at least ca. 100°C. When the mandrel 2 has reached t a desired temperature, a melt profile 7 of thermoplast is extruded on the main section 6 of the rotating mandrel, starting at that end of the mandrel 2, which is located farthest away from the pipe end 4. The extrusion is preferably carried out with an extruder nozzle 8 of a mainly rectangular cross-section, which extruder nozzle 8 may be transferred in an axial direction along the mandrel 2. The transferring of the extruder nozzle 8 in a direction against the pipe end 4 occurs synchronically with the rotational speed of the mandrel 2 such that the extruder nozzle 8 for each rotation the mandrel 2 rotates transfers in the direction against the pipe end 4 by a distance slightly less than the width of the melt profile such that a certain overlapping is obtained. In this way, a spiral winding of the melt profile 7 around the mandrel 2 and pipe end 4 is obtained, where limiting winding turns are located tightly one above the other such that a welding-together of the melt profiles is obtained. For improving the welding together and for obtaining a more uniform surface on the joint pipe, the overlapping is pressed down with a rotating roll 11, which follows the extruder head. The extrusion continues until a desired overlapping between the melt profile 7 and the pipe end 4 is obtained, after which the extruder is stopped, while the rotation of the pipe end 4 and the mandrel 2 may continue. Thus, a uniform transition in the material thickness between the mantle of the pipe end 4 and the joint pipe 1 is obtained.

When the extrusion is stopped, the thermoplastic material in the joint pipe 1 is cooled down by spraying cooling water from the outside upon the extruded joint pipe 1. When the thermoplast material has set, the free end of the joint pipe 1 is cut uniform with a rotating knife 9, whereby an absolutely uniform surface is obtained. Finally, the pipe end 4 with the completed joint pipe 1 are removed from the mandrel 2, after which the manufacturing of next joint pipe may be started.

Heating of the mandrel 2 may e.g. be performed with a gas blower from the inside or the outside, or in an inductive way from the outside.

For ensuring the fixing between the pipe end 4 and the mandrel 2 during the different manufacturing steps, the cylindrical section 3 of the mandrel 2 may suitably be of an expansive construction, whereby the mantle of the section 3 is divided by a number of axially directed gaps 10, and the expansion is achieved in a hydraulic, pneumatic or solely mechanical way via toggle joints.

The welding-together of the spiral wound melt profiles 7 may be intensified by applying a weak mechanical loading on the melt profiles 7 e.g. by means of a rotating roll 11 affecting the melt profiles 7 located close to each others on the mandrel 2, immediately after the nozzle 8.

The rotating knife 9 comprises preferably a freely rotatable circular blade, which may be pressed in a hydraulic or mechanical way against the joint pipe 1 extruded on the mandrel 2.

The pipes 4, which can be provided with a joint pipe 1 according to the present invention, are thermoplastic pipes of different types, such as entirely conventional polyethylene pipes or spirally wound pipes of some other type.

The removal of the pipe end 4 with the completed joint pipe 1 from the mandrel 2 is carried out by blowing pressurized air between the mandrel 2 and joint pipe 1, preferably via small gaps or holes contained in the conical section 6 of the mandrel 2, at the same time as a push force is directed onto the joint pipe 2 in a direction against the pipe 4.

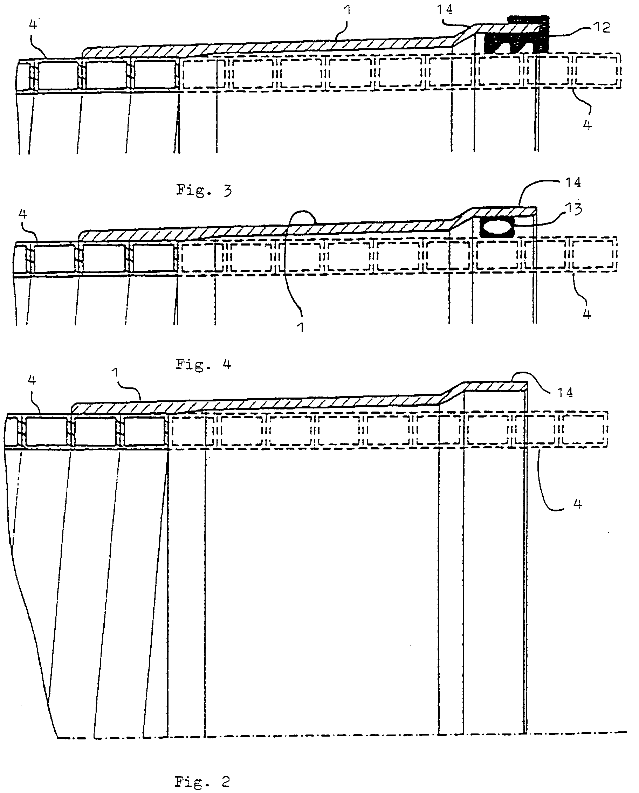

In Figs 2 to 4 a preferable embodiment of the joint pipe 1 is shown. In connection with the manufacturing of this joint pipe, the conical section 6 of the mandrel has a mainly cylindrical end section with an increased diameter so that the joint pipe 1 manufactured obtains a cylindrical end section 14 extended in a corresponding manner. In joining-together of pipes by means of such a joint pipe 1, the joint pipe may be used, depending on the application area, as such, or, when higher requirements are set on the sealing, a rubber seal 12 according to Fig. 3 or a welding ring 13 according to Fig. 4 may be used. As a result of this possibility, the application range for the joint pipe 1 manufactured according to the invention increases significantly.

## Claims

1. A method for manufacturing a joint pipe at an end of a thermoplastic pipe (4) comprising the steps of spirally winding an extruded melt thermoplastic profile (7) with an overlapping around a rotatably driven mandrel (2), cooling the extruded joint pipe (1), cutting the free end of the joint pipe by means of a rotating knife (9) and removing the completed joint pipe from the mandrel, **characterized** by pushing an end of a prefabricated thermoplastic pipe (4) onto a mainly cylindrical end section (3) of the mandrel (2), which is heated, said end section (3) having a diameter corresponding to the inner diameter of the pipe (4) and towards a radial stop surface (5) of the mandrel (2) connecting the end section (3) and a weakly conical section (6) of the mandrel (2) and having a width corresponding to the wall thickness of the pipe end (4); starting the spirally winding of the melt profile (7) at that end of the mandrel (2), which is turned away from the pipe end (4), and continues towards and over the pipe end to a desired overlapping degree between the extruded joint pipe (1) and the pipe end (4), whereby stopping the extruder while the mandrel (2) and the pipe (4) are still rotating, and cooling the extruded joint pipe by spraying cooling water from the outside over said joint pipe.

2. A method according to Claim 1, **characterized** by heating the mandrel (2) up to at least 100°C before the extrusion.

3. A method according to Claim 1 or 2, **characterized** by fixing the pipe end (4) around the cylindrical section (3) of the mandrel (2) by temporarily extending this section (3).

4. A method according to any of the preceding Claims, **characterized** by subjecting the extruded melt profile (7) to a weak mechanical loading by means of a rotating roll for intensifying the welding-together of the melt profile windings (7) overlapping each other.

5. A method according to any of the preceding Claims, **characterized** by pressing the rotating knife (9) which comprises a freely rotating circular blade, against the thermoplastic material of the joint pipe (1) in connection with the cutting of the end of the joint pipe (1).

6. A method according to any of the preceding Claims, **characterized** by removing the pipe end (4) with the completed joint pipe (1) from the mandrel (2) by blowing pressurized air between the mandrel (2) and the joint pipe (2) while at the same time directing a push force onto the joint pipe (1) in a direction against the pipe (4).

7. A method according to any of the preceding Claims, **characterized** by providing the conical section (6) of the mandrel with a mainly cylindrical end section with an increased diameter, whereby the joint pipe manufactured obtains an end section (14) extended in a corresponding manner, which makes the application of a sealing ring (12) or a welding ring (13) possible.

## Patentansprüche

1. Verfahren zum Herstellen eines Verbindungsrohres an einem Ende eines thermoplastischen Rohres (4), bei dem ein extrudiertes thermoplastisches geschmolzenes Profil (7) schraubenlinienförmig mit einer Überlappung um einen drehend angetriebenen Dorn (2) gewickelt, das extrudierte Verbindungsrohr (1) abgekühlt, das freie Ende des Verbindungsrohres mittels eines rotierenden Messers (9) zugeschnitten und das fertige Verbindungsrohr von dem Dorn entfernt wird, dadurch gekennzeichnet, daß ein Ende eines vorgefertigten thermoplastischen Rohres (4) auf einen im wesentlichen zylindrischen Endabschnitt (3) des Dorns (2), der erwärmt ist, wobei der Endabschnitt (3) einen dem Innendurchmesser des Rohres (4) entsprechenden Durchmesser aufweist, und bis gegen eine radiale Anschlagfläche (5) des Dorns (2) geschoben wird, die den Endabschnitt (3) und einen leicht konischen Endabschnitt (6) des Dorns (2) verbindet und eine der Wanddicke des Rohrendes (4) entsprechende Breite aufweist; das schraubenlinienförmige Herumwickeln des geschmolzenen Profils an demjenigen Ende des Dorns (2) begonnen wird, das dem Rohrende (4) abgekehrt ist, und in Richtung auf und über das Rohrende hinweg bis zu einem gewünschten Überlappungsmaß zwischen dem extrudierten Verbindungsrohr (1) und dem Rohrende (4) fortgesetzt wird, wonach der Extruder angehalten wird, während sich der Dorn (2) und das Rohr (4) weiterdrehen, und das extrudierte Verbindungsrohr durch Aufsprühen von Kühlwasser von außen her über das Verbindungsrohr abgekühlt wird.

2. Verfahren nach Anspruch 1, dadurch gekennzeichnet, daß der Dorn (2) vor der Extrusion bis auf wenigstens 100°C erwärmt wird.

3. Verfahren nach Anspruch 1 oder 2, dadurch gekennzeichnet, daß das Rohrende (4) um den zylindrischen Abschnitt (3) des Dorns (2) durch vorübergehende Aufweitung dieses Abschnitts (3) befestigt wird.

4. Verfahren nach einem der vorstehenden Ansprüche, dadurch gekennzeichnet, daß das extrudierte geschmolzene Profil (7) mittels einer rotierenden Rolle einer leichten mechanischen Belastung ausgesetzt wird, um das Zusammenschweißen der sich überlappenden geschmolzenen Profilwindungen (7) zu intensivieren.

5. Verfahren nach einem der vorstehenden Ansprüche, dadurch gekennzeichnet, daß das rotierende Messer (9), das eine sich frei drehende kreisförmige Klinge aufweist, beim Zuschneiden des Endes des Verbindungsrohres (1) gegen das thermoplastische Material des Verbindungsrohres (1) gedrückt wird.

6. Verfahren nach einem der vorstehenden Ansprüche, dadurch gekennzeichnet, daß das Rohrende (4) zusammen mit dem fertigen Verbindungsrohr (1) durch Blasen von Druckluft zwischen Dorn (2) und Verbindungsrohr (1) und gleichzeitige Ausübung einer Druckkraft auf das Verbindungsrohr (1) in Richtung auf das Rohr (4) entfernt wird.

7. Verfahren nach einem der vorstehenden Ansprüche, dadurch gekennzeichnet, daß der konische Abschnitt (6) des Dorns mit einem im wesentlichen zylindrischen Endabschnitt mit größerem Durchmesser versehen wird, so daß das fertige Verbindungsrohr einen Endabschnitt (14) erhält, der in entsprechender Weise aufgeweitet ist, so daß die Anwendung eines Dichtungsrings (12) oder eines Schweißrings (13) möglich ist.

## Revendications

1. Procédé de fabrication d'un tuyau de raccordement à une extrémité d'un tuyau thermoplastique (4) comprenant les phases consistant à : enrouler en spirale un profilé thermoplastique extrudé à chaud (7) avec une partie en chevauchement autour d'un mandrin entraîné à rotation (2), refroidir le tuyau de raccordement extrudé (1), couper l'extrémité libre du tuyau de raccordement au moyen d'un couteau rotatif (9) et enlever le tuyau de raccordement terminé du mandrin, caractérisé par les opérations consistant à pousser une extrémité d'un tuyau thermoplastique préfabriqué (4) sur une section d'extrémité principalement cylindrique (3) du mandrin (2), qui est chauffé, ladite section d'extrémité (3) ayant un diamètre correspondant au diamètre intérieur du tuyau (4), et vers une surface d'arrêt radiale (5) du mandrin (2) reliant la section d'extrémité (3) et une section légèrement conique (6) du mandrin (2) et ayant une largeur correspondant à l'épaisseur de paroi de l'extrémité de tuyau (4); commencer l'enroulement en spirale du profilé en fusion (7) à ladite extrémité du mandrin (2), qui est orientée loin de l'extrémité de tuyau (4), et continuer vers l'extrémité de tuyau et sur l'extrémité de tuyau jusqu'à un degré de chevauchement souhaité entre le tuyau de raccordement extrudé (1) et l'extrémité de tuyau (4), de sorte à arrêter l'extrudeuse tandis que le mandrin (2) et le tuyau (4) tournent encore, et refroidir le tuyau de raccordement extrudé par pulvérisation d'eau de refroidissement depuis l'extérieur sur ledit tuyau de raccordement.

2. Procédé selon la revendication 1, caractérisé en ce que le mandrin (2) est chauffé jusqu'à une température d'au moins 100°C avant l'extrusion.

3. Procédé selon la revendication 1 ou la revendication 2, caractérisé en ce que l'extrémité de tuyau (4) autour de la section cylindrique (3) du mandrin (2) est fixée par extension provisoire de ladite section (3).

4. Procédé selon l'une quelconque des revendications précédentes, caractérisé en ce que le profilé extrudé à chaud (7) est soumis à une faible charge mécanique au moyen d'un cylindre rotatif pour accroître le soudage l'un à l'autre des enroulements du profilé en fusion (7) se chevauchant.

5. Procédé selon l'une quelconque des revendications précédentes, caractérisé en ce que le couteau rotatif (9) qui comprend une lame circulaire à rotation libre, est pressé contre le matériau thermoplastique du tuyau de raccordement (1) conjointement à la coupe de l'extrémité du tuyau de raccordement (1).

6. Procédé selon l'une quelconque des revendications précédentes, caractérisé en ce que l'extrémité de tuyau (4) avec le tuyau de raccordement terminé (1) est enlevée du mandrin (2) en soufflant de l'air pressurisé entre le mandrin (2) et le tuyau de raccordement (1) tout en dirigeant une force de poussée sur le tuyau de raccordement (1) dans une direction contre le tuyau (4).

7. Procédé selon l'une quelconque des revendications précédentes, caractérisé en ce que la section conique (6) du mandrin est dotée d'une section d'extrémité principalement cylindrique de diamètre augmenté, de sorte que le tuyau de raccordement fabriqué obtient une section d'extrémité (14) augmentée de façon correspondante, qui permet l'application d'un anneau d'étanchéité (12) ou d'un anneau de soudage (13).
